# EUROPÄISCHE PATENTANMELDUNG

(11) **EP 2 073 338 A1**
(43) Veröffentlichungstag der Anmeldung: **24.06.2009**
(21) Anmeldenummer: 08105921.4
(22) Anmeldetag: 03.12.2008
(51) Int. Cl.: H02J 7/00

(54) **Ladevorrichtung für schnurlose Telefone**

(30) Priorität: 19.12.2007 DE 102007055863
(71) Anmelder: Deutsche Telekom AG, 53113 Bonn (DE)
(72) Erfinder: Wegerle, Claus, 68623, Lampertheim (DE)

(57) **Zusammenfassung**

Verfahren zur Steuerung einer an eine Versorgungsspannung angeschlossenen Ladevorrichtung für ein kabelloses Endgerät 2 insbesondere zur Telekommunikation, wobei ein Wandler die Versorgungsspannung in eine Ladespannung wandelt, wobei das Endgerät 2 zum Laden seines Akkus in eine Aufnahme 1 der Ladevorrichtung herausnehmbar eingesetzt wird und wobei ein eingesetztes Endgerät 2 an die Ladespannung angeschlossen wird, wobei mittels eines Sensormittels 9 ein Ladebedarf ermittelt wird, wobei mit einem Signal des Sensormittels 9 ein Schalter geschaltet wird, der den Wandler von der Versorgungsspannung trennt, wenn kein Ladebedarf besteht.

## Beschreibung

Die Erfindung betrifft ein Verfahren zur Steuerung einer an eine Versorgungsspannung angeschlossenen Ladevorrichtung für kabellose Endgeräte insbesondere zur Telekommunikation. Eine solche Ladevorrichtung umfasst einen Wandler, mit dem die Versorgungsspannung, beispielsweise 220 V AC aus einer Netzsteckdose, in eine Ladespannung gewandelt wird. Zum Laden seines Akkus wird das Endgerät in eine Aufnahme der Ladevorrichtung herausnehmbar eingesetzt und dadurch an die Ladespannung angeschlossen. Zudem betrifft die Erfindung eine Ladevorrichtung zur Durchführung des Verfahrens.

Um den Aktionsradius der Nutzer über die Länge des zur Verfügung stehenden Kabels hinaus auszudehnen, werden Endgeräte, wie insbesondere Telefone aber auch Zahnbürsten und dergleichen, in einer kabellosen Ausführung für einen vom Versorgungsnetz unabhängigen Betrieb angeboten. Als solche kabellosen Endgeräte sind sogenannte "schnurlosen Telefone" oder "Home-Handys", also im Wohnbereich einsetzbare und an eine Sendestation gebundene mobile Festnetztelefone mit begrenztem Sendebereich, bekannt. Diese haben einen Akku, der eine gewisse Betriebszeit gewährleistet, der aber immer wieder aufgeladen werden muss. Eine entsprechende Ladevorrichtung gehört somit zwangsläufig zum notwendigen Zubehör solcher kabellosen Telefone.

Im Fall von Handys als quasi "ungebundenen" Mobiltelefonen haben diese Ladevorrichtungen meist einen Trafo, der direkt in die Netzsteckdose eingesteckt wird und der über ein Schwachstromkabel und einen Stecker mit dem Endgerät verbunden wird. Von den oben beschriebenen schnurlosen Telefonen sind jedoch Ladevorrichtungen mit einer Aufnahme in Form einer Ladeschale bekannt. Diese Ladevorrichtungen haben in der Wohnung meist einen festen Platz in der Nähe einer Steckdose, so dass ein unkompliziertes und damit komfortables Aufladen und mitunter auch ein schnelles Auffinden des Telefons gewährleistet ist. Dabei wird das schnurlosen Telefon einfach in die Aufnahme herausnehmbar eingesetzt und kann durch anheben wieder entnommen werden. Solche Ladevorrichtungen bleiben üblicherweise ständig mit dem Versorgungsnetz verbunden.

Ohne das eingesteckte Endgerät befindet sich das mit dem Versorgungsnetz verbundene Netzteil der Ladevorrichtung in einer Art Leerlauf, wobei jedoch auch in diesem unbelasteten Zustand ein geringer Strom durch den Trafo fließt. Dieser Verluststrom führt einerseits zu unnötigen Stromkosten, Co₂-Emissionen und andererseits, auf die Masse der Netzteile gesehen, auch zu einer nicht unbeträchtlichen Verschwendung von Ressourcen durch unnötigen Stromverbrauch. Im unbelasteten Zustand verbrauchen die bekannten Ladevorrichtungen eine Leerlaufleistung von ca. 1,5 W, was sich über die Lebensdauer gesehen auf einen enormen Betrag summieren kann.

Aufgabe der vorliegenden Anmeldung ist es nunmehr, ein mit einfachen Mitteln umzusetzendes Verfahren zum Aufladen von Endgeräten der eingangs genannten Art zu schaffen, das dazu beiträgt, die Verluste zu mindern oder sogar zu vermeiden. Des Weiteren ist es die Aufgabe der vorliegenden Erfindung, eine Vorrichtung zum Umsetzen des Verfahrens vorzuschlagen.

Gelöst werden diese Aufgaben durch das Verfahren mit den kennzeichnenden Merkmalen des Anspruch 1 und die Vorrichtung nach Anspruch 6. Besondere Ausführungsformen sind in den jeweiligen Unteransprüchen genannt.

Der erfindungswesentliche Grundgedanke liegt darin, die Ladevorrichtung mit einem Sensormittel auszustatten, das ermittelt, inwieweit überhaupt Ladebedarf vorliegt, also ob ein Endgerät, insbesondere das schnurlose Telefon, in die Aufnahme eingesteckt ist und gegebenenfalls ob dessen Akku schon eine Entladung erfahren hat, die es sich lohnt wieder aufzuladen. Über das Sensormittel wird dabei ein Schalter geschaltet, der den Strom verbrauchende Wandler komplett von der Versorgungsspannung trennt. Dieser im Pfad der Versorgungsspannung angebrachte Schalter wird nur dann auf Durchlass geschaltet, wenn das Sensormittel einen Ladebedarf ermittelt hat, also wenn ein ladebedürftiges Endgerät eingesteckt ist. Ansonsten bleibt der Wandler bei geöffnetem Schalter von der Versorgungsspannung abgekoppelt. Dieses erfindungsgemäße Vorgehen hat den wesentlichen Vorteil, dass ein solcherart von der Versorgungsspannung abgekoppelter Wandler auch keinen Verluststrom mehr ziehen kann, so dass Kosten für den Nutzer und letztendlich auch Ressourcen gespart werden können. Aufgrund der Meldung des Sensormittels kann der Wandler bedarfsgerecht geschaltet werden. Die Ladevorrichtung wird erfindungsgemäß auf einfache Weise je nach Bedarf außer Betrieb gesetzt und entsprechend wieder in Betrieb genommen.

Wie schon angedeutet, gibt es zwei Situationen, bei denen kein Ladebedarf besteht: Die eine ist, dass kein Endgerät in die Aufnahme eingesteckt ist, die andere, dass der Akku des eingesteckten Endgerätes noch voll ist. Ladebedarf kann aber nur bei eingestecktem Endgerät ermittelt werden. Im einfachsten Fall signalisiert also ein in die Aufnahme eingesetztes Endgerät dem Sensormittel, dass Ladebedarf besteht. Das Sensormittel wirkt dann derart auf den Schalter, der den Wandler mit der Versorgungsspannung verbindet, ein, dass dieser geschlossen wird. In einer vorteilhaften Ausführungsform wird das Schließen jedoch vom Vorliegen der weiteren Bedingung abhängig gemacht, dass gleichzeitig ein zumindest teilweise entleerter Akku festgestellt wird.

In einer besonders vorteilhaften, weil einfach umzusetzenden und robusten Ausführungsform, funktioniert das Sensormittel durch mechanische Beaufschlagung, indem ein eingesetztes Endgerät auf das Sensormittel in Form eines Druckknopfes, eines Hebels oder dergleichen wirkt. Dabei ist es zudem besonders vorteilhaft, wenn dieses mechanisch betätigbare Sensormittel zugleich auch der Schalter ist, der die Versorgungsspannung schaltet. Damit schaltet die mechanische Beaufschlagung des Sensormittels auch den Schalter. Diese einteilige Ausführung von Schalter und Sensormittel ermöglicht eine besonders kompakte und robuste Bauweise der Ladeschale mit der Aufnahme und einen einfacheren Zusammenbau aufgrund weniger zu verbauender Teile. Das bedingt jedoch, dass die Versorgungsspannung durch ein Netzkabel bis in die Ladeschale gelangt und dort unmittelbar geschaltet werden kann. Durch das zusätzliche Gewicht des den Wandler aufweisenden Netzteils in der Ladeschale, steht diese jedoch besonders sicher.

Das mechanisch zu betätigende Sensormittel kann jedoch auch einen beispielsweise durch ein Piezoelement erzeugten elektrischen Puls auslösen, der einen fernliegenden Schalter, beispielsweise ein Relais, schaltet. Bei der elektrischen Auslösung kann das Einstellen des Endgerätes in die Aufnahme auch durch das Verbinden der Ladekontakte mit dem Akku des Endgerätes detektiert werden. Durch die Entnahme des Mobilteils aus der Ladeschale kann ein nochmaliger Puls den Kontakt entsprechend wieder unterbrechen. Das Sensormittel kann sich auch der vorhandenen Ladekontakte bedienen, wobei es besonders vorteilhaft ist, die durch das aufgesetzte Endgerät verbundene Ladekontakte durch Induktion festzustellen. Der Schalter kann als elektrisch schaltbares Relais ausgelegt werden.

Generell ist ein elektrisches Betätigen des Schalters vorteilhaft, wenn dieser nicht in der Ladeschale platziert werden kann, sondern in einem separaten, den Wandler aufweisenden Netzteil angeordnet ist, das unmittelbar in die Steckdose gesteckt wird und über eine Niederspannungsleitung mit der Ladeschale verbunden ist. Der elektrische Impuls, der den Schalter fernbetätigt kann über eine der vorhandenen Leitungen oder über eine zusätzliche Leitung geschehen. Zum Schließen des Schalters beim Einstellen des Endgeräts in die Ladeschale kann die vorhandene Energie im Akkumulator des kabellosen Kommunikationsendgeräts oder ein in der Ladevorrichtung vorgesehener Energiepuffer eingesetzt werden. Die hierfür erforderliche Schaltung kann kompakt aufgebaut werden und ist einfach zu realisieren.

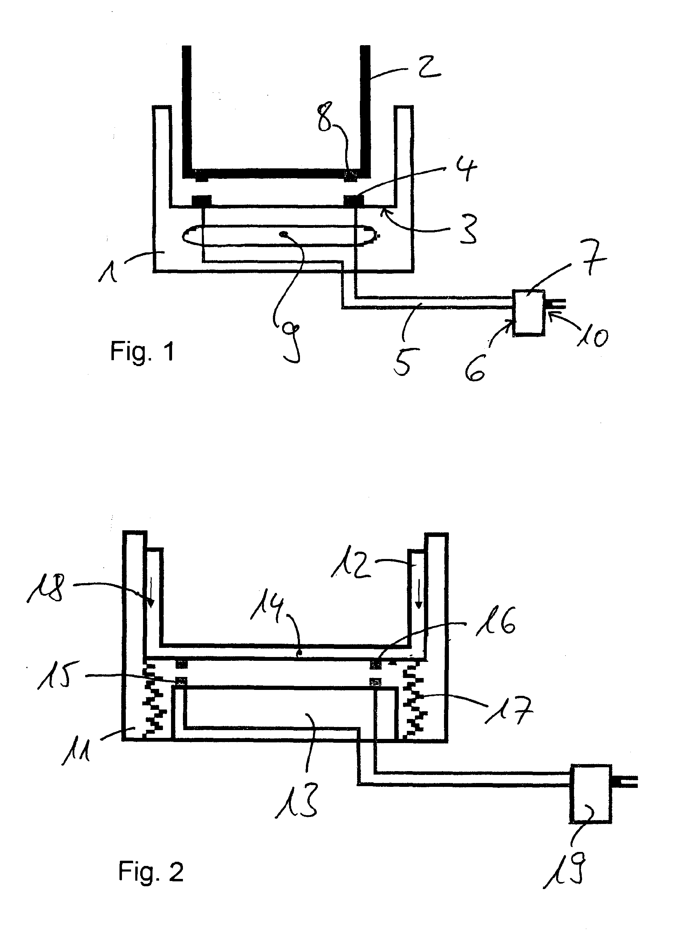

Nachfolgend wird die Erfindung anhand der Figuren 1 und 2 näher erklärt. Dabei zeigen:
- **Figur 1**: den schematischen Aufbau einer Ladevorrichtung mit einem induktiven Schalter und
- **Figur 2**: eine alternative Ausführungsform.

Die Figur 1 zeigt eine Ladeschale mit einer Aufnahme 1 als Teil einer Ladevorrichtung für ein kabelloses Endgerät 2, das in diesem Fall ein schnurloses Telefon ist. Die Aufnahme 1 weist in ihrem Boden 3 an die Gegenkontakte 8 des Endgerätes entsprechend angepasste Ladekontakte 4 auf, die über Kabel 5 mit einer Ausgangsseite 6 eines außerhalb der Aufnahme 1 angeordneten Schaltnetzteils 7 verbunden sind, wobei das Schaltnetzteil den Wandler zur Umwandlung der Versorgungsspannung in eine Ladespannung umfasst. Wird das Endgerät 2 in die Ladeschale 1 eingesetzt, treten die Ladekontakte 4 in Verbindung mit den entsprechenden Gegenkontakten 8 des Endgeräts 2, die mit einem nicht gezeigten Akku des Endgeräts 2 in Verbindung stehen. Eine das Sensormittel bildende Schleife 9 innerhalb der Ladeschale 1 stellt das Einsetzen des Endgeräts 2 in die Ladeschale 1 und damit den Ladebedarf über das Schließen der Ladekontakte 4, 8 fest und schaltet das Schaltnetzteil 7 mit einem an seiner Eingangsseite 10 angeordneten nicht gezeigten die Versorgungsspannung schaltenden Schalter ein. Insofern steht das Sensormittel in Wirkverbindung mit dem Schalter zum Unterbrechen der Versorgungsspannung. Der Akku ist jetzt über die Ladekontakte 4, 8, die elektrischen Leiter 5 und das Schaltnetzteil 7 mit einem Versorgungsnetz verbunden. Mit dem Einschalten des Schaltnetzteils 7 wird der Akku des Endgeräts 2 geladen.

Wird das Endgerät 2 aus der Ladeschale 1 entnommen, werden die Ladekontakte 4, 8 von einander getrennt. Das Sensormittel 9 koppelt über den Schalter das Schaltnetzteil 7 vom Versorgungsnetz ab. Der Stromfluss wird unterbrochen und ein Leerlauf des Schaltnetzteils 7 vermieden.

Die Figur 2 zeigt eine Aufnahme 11 für ein nicht gezeigtes kabelloses Endgerät. In die Aufnahme 11 ist eine Ladeschale 12 integriert, die in der Aufnahme 11 beweglich gelagert ist. Die Aufnahme 11 und die Ladeschale 12 weisen in ihren Böden 13 und 14 sich gegenüber liegende Standardladekontakte 15 und 16 auf. Der Boden 14 der Ladeschale 12 wird von einer Feder 17 beaufschlagt. Ist kein kabelloses Endgerät in die Ladeschale 12 eingesetzt, reicht die Federkraft der Feder 17 aus, den Boden 14 der Ladeschale 12 derart vom Boden 13 der Aufnahme 11 abzuheben, dass die Ladekontakte 15 der Ladeschale nicht in Kontakt zu den Ladekontakten 15 der Aufnahme 11 stehen. Wird ein Endgerät in die Ladeschale 12 eingesetzt, reicht die Federkraft der Feder 17 nicht mehr aus, das gemeinsame Gewicht von Endgerät und Ladeschale 12 zu tragen. Die Ladeschale 12 wird von dem zusätzlichen Gewicht des Endgerät in Richtung des Pfeils 18 gegen den Boden 13 der Aufnahme 11 gedrückt, bis die Ladekontakte 16 mit den Ladekontakten 15 in Verbindung stehen. Wird das Endgerät wieder aus der Aufnahme 11 entnommen, wird die Ladeschale 12 von der Feder 17 wieder in die Ausgangsposition bewegt und die Ladekontakte 15, 16 wieder von einander getrennt.

Im übrigen erfolgt die An- und Abkopplung des Schaltnetzteils 19 auf die gleiche Art und Weise wie für das in Figur 1 gezeigte Schaltnetzteil 7 beschrieben.

## Patentansprüche

1. Verfahren zur Steuerung einer an eine Versorgungsspannung angeschlossenen Ladevorrichtung für ein kabelloses Endgerät (2) insbesondere zur Telekommunikation, wobei ein Wandler die Versorgungsspannung in eine Ladespannung wandelt, wobei das Endgerät (2) zum Laden seines Akkus in eine Aufnahme (1) der Ladevorrichtung herausnehmbar eingesetzt wird und wobei ein eingesetztes Endgerät (2) an die Ladespannung angeschlossen wird,
**dadurch gekennzeichnet,**
**dass** mittels eines Sensormittels (9) ein Ladebedarf ermittelt wird, wobei mit einem Signal des Sensormittels (9) ein Schalter geschaltet wird, der den Wandler von der Versorgungsspannung trennt, wenn kein Ladebedarf besteht.

2. Verfahren nach Anspruch 1,
**dadurch gekennzeichnet,**
**dass** ein in die Aufnahme (1) eingesetztes Endgerät (2) dem Sensormittel (9) Ladebedarf signalisiert und der Schalter zur Verbindung des Wandlers mit der Versorgungsspannung geschlossen wird, wobei insbesondere vorher das Vorliegen einer weiteren Bedingung, beispielsweise der Ladebedarf des Akku, geprüft wird.

3. Verfahren nach Anspruch 2,
**dadurch gekennzeichnet,**
**dass** das Sensormittel (9) durch mechanische Beaufschlagung beim Einsetzen des Endgerätes (2) ausgelöst wird.

4. Verfahren nach Anspruch 3,
**dadurch gekennzeichnet,**
**dass** die mechanische Beaufschlagung des Sensormittels (9) den Schalter schaltet.

5. Verfahren nach einem der vorherigen Ansprüche,
**dadurch gekennzeichnet,**
**dass** ein ladebedürftiger Akku des eingesetzten Endgerätes (2) dem Sensormittel (9) Ladebedarf signalisiert und der Schalter zur Verbindung des Wandlers mit der Versorgungsspannung geschlossen wird.

6. Ladevorrichtung für ein kabelloses Endgerät, insbesondere zur Durchführung des Verfahrens nach einem der vorherigen Ansprüche, umfassend einen Wandler zur Umwandlung der Versorgungsspannung in eine Ladespannung und umfassend eine Aufnahme (1) für das kabellose Endgerät (2), wobei in der Aufnahme (1) Kontakte (4) vorgesehen sind, die entsprechende Gegenkontakte (8) eines in die Aufnahme eingesetzten Endgerätes (2) kontaktieren,
**gekennzeichnet durch**
ein Sensormittel (9) zur Bestimmung des Ladebedarfs eines in die Aufnahme (1) einzusteckenden Endgerätes (2), wobei das Sensormittel (9) in Wirkverbindung steht mit einem Schalter zum Unterbrechen der Versorgungsspannung.

7. Ladevorrichtung nach Anspruch 6,
**dadurch gekennzeichnet,**
**dass** das Sensormittel (9) in der Aufnahme (1) angeordnet ist.

8. Ladevorrichtung nach Anspruch 6 oder 7,
**dadurch gekennzeichnet,**
**dass** das Sensormittel (9) mechanisch auslöst und in mechanischer Wirkverbindung mit dem Schalter steht.

9. Ladevorrichtung nach Anspruch 8,
**dadurch gekennzeichnet,**
**dass** das Sensormittel (9) und der Schalter einteilig ausgebildet und in der Aufnahme (1) angeordnet sind.

10. Ladevorrichtung nach einem der Ansprüche 6 oder 7,
**dadurch gekennzeichnet,**
**dass** das Sensormittel (9) elektrisch, insbesondere induktiv, auslöst und in elektrischer Wirkverbindung mit dem insbesondere als Relais ausgebildeten Schalter steht.
